Europäisches Patentamt

European Patent Office

Office européen des brevets

(19)

(11) Veröffentlichungsnummer: **0 049 784**
**B1**

(12) # EUROPÄISCHE PATENTSCHRIFT

(45) Veröffentlichungstag der Patentschrift:
16.01.85

(21) Anmeldenummer: **81107471.5**

(22) Anmeldetag: **21.09.81**

(51) Int. Cl.⁴: **C 08 F 6/24,** B 01 D 19/00 //
(C08F6/24, 14/06)

(54) Verfahren zur Entfernung von restlichem Vinylchlorid aus Vinylchloridpolymeren.

(30) Priorität: **10.10.80 DE 3038287**

(43) Veröffentlichungstag der Anmeldung:
**21.04.82 Patentblatt 82/16**

(45) Bekanntmachung des Hinweises auf die Patenterteilung:
**16.01.85 Patentblatt 85/3**

(84) Benannte Vertragsstaaten:
**AT BE CH DE FR GB IT LI NL SE**

(56) Entgegenhaltungen:
**DE - A - 2 522 324**
**FR - A - 1 439 898**
**FR - A - 2 094 243**
**FR - A - 2 281 939**

(73) Patentinhaber: **DEUTSCHE SOLVAY-WERKE GMBH,**
**Langhansstrasse 6, D-5650 Solingen 11 (DE)**

(72) Erfinder: **Schaper, Werner,**
**Geheimrat-Schmitz-Strasse 18, D-4134 Rheinberg (DE)**
Erfinder: **Roghmann, Jürgen, Fliederstrasse 5,**
**D-4134 Rheinberg (DE)**

(74) Vertreter: **Seiler, Siegfried, Langhansstrasse 6,**
**D-5650 Solingen 11 (DE)**

## Beschreibung

Die vorliegende Erfindung betrifft ein Verfahren zur Entfernung von restlichem Vinylchlorid aus Vinylchloridpolymeren, welche nach einer Polymerisation in Form einer wässrigen Dispersion vorliegen, wobei man die wässrige Polymerisatdispersion in einen Entgasungsbehälter überführt, auf eine der Einfriertemperatur des Polymeren wenigstens gleiche Temperatur, vorzugsweise auf eine Temperatur unter 120 °C bringt und sie einem Mitschleppen durch ein inertes Fluid, nämlich Wasserdampf, unterwirft und entgast. Innerhalb bestimmter Verfahrensmassnahmen wird der vinylchloridhaltige Wasserdampf kondensiert, das Vinylchlorid einer Rückgewinnung zugeführt und das kondensierte vinylchloridhaltige Wasser insgesamt oder teilweise in die wässrige Polymerisatdispersion eingeführt. Nach dem erfindungsgemässen Verfahren wird das kondensierte vinylchloridhaltige Wasser nicht unmittelbar in die wässrige Polymerisatdispersion, sondern im Gegenstrom zu dem aus der Polymerisatdispersion austretenden Wasserdampf geführt und bei oder nach der Eintrittsstelle in dem vinylchloridhaltigen Wasserdampf verteilt, verspritzt oder verdüst. Die Erfindung betrifft weiterhin eine Vorrichtung zur Ausübung des Verfahrens.

Ein Verfahren zur Entfernung von restlichem, aus der Polymerisation stammenden Vinylchlorid in Polyvinylchloridpolymeren, welche in Form einer wässrigen Dispersion vorliegen, nachdem man die wässrige Dispersion des Polymeren auf eine dem Einfrierbereich des Polymeren wenigstens gleiche Temperatur bringt und man sie einem Mitschleppen durch ein inertes Fluid unterwirft, während sie auf einer dem Einfrierbereich wenigstens gleichen Temperatur gehalten wird, ist bereits aus der DE-OS 25 31 111 bekannt. Die wässrige Dispersion des Polymeren wird dabei auf eine Temperatur unterhalb von 140 °C, vorzugsweise 120 °C, gebracht und vor dem Erwärmen vorzugsweise bei einer Temperatur unterhalb der Polymerisationstemperatur entgast. Als inertes Fluid wird dabei u.a. Wasserdampf verwendet, der durch Sieden der wässrigen Dispersion erzeugt wird. Nachfolgend wird das Sieden der wässrigen Dispersion nach einer Ausführungsform bei der DE-OS 25 31 111 vorteilhaft durch ein Absenken des Druckes aufrechterhalten, nachdem sie der Mitschleppbehandlung mittels eines inerten Fluides unterzogen worden ist. Dieses Verfahren führt man bevorzugt so durch, dass das Sieden ohne Zufuhr von Kalorien von aussen aufrechterhalten wird, der Druck in dem Masse abgesenkt wird, wie die Temperatur der wässrigen Dispersion abnimmt. Die Behandlung hält man an, wenn die Temperatur der wässrigen Dispersion einen Wert unterhalb des Einfrierbereiches des Polymeren erreicht hat, vorzugsweise wenn die Temperatur der wässrigen Dispersion einen Wert zwischen 50 und 80 °C erreicht hat. Den Vinylchlorid enthaltenden Wasserdampf kondensiert man in einem Kondensator, der in Verbindung mit dem Behälter für die Behandlung und mit einer direkt auf ihm angeordneten Vakuumpumpe steht, wobei nach einer Ausführungsform ein Teil des kondensierten Wassers in den Behandlungsbehälter erneut eingeführt wird. Weitere Verfahrensmassnahmen und Einzelheiten sind aus der DE-OS 25 31 111 ersichtlich.

Mit Hilfe dieses in der DE-OS 25 31 111 beschriebenen Verfahrens ist es möglich, nicht nur das sich auf dem Äusseren der Polymerenteilchen befindliche Vinylchlorid zu entfernen, sondern auch dasjenige, welches sich im Inneren der Teilchen eingeschlossen befindet. Wenn die Betriebsbedingungen richtig ausgewählt werden, enthält das getrocknete Polymere einen äusserst geringen Vinylchlorid-Restgehalt, so dass es vielseitig einsetzbar ist und für die unterschiedlichsten Verpackungen und dgl. eingesetzt werden kann. Führt man innerhalb dieses Verfahrens das vinylchloridhaltige Kondensat in den Behandlungsbehälter erneut direkt ein, so steigt der Vinylchloridgehalt allmählich an. Ziel und Aufgabe der vorliegenden Erfindung war es, dieses Ansteigen des Vinylchloridgehaltes zu vermeiden und auch das im vinylchloridhaltigen Kondensat enthaltene Vinylchlorid zu einem grossen Teil zurückzugewinnen.

Erfindungsgemäss wurde festgestellt dass diese Aufgaben ausgehend von dem Verfahren gemäss DE-OS 25 31 111 dadurch gelöst werden können, dass das kondensierte vinylchloridhaltige Wasser nicht unmittelbar in die wässrige Polymerisatdispersion, sondern im Gegenstrom zu dem aus der Polymerisatdispersion austretenden Wasserdampf geführt und bei oder nach der Eintrittsstelle in dem vinylchloridhaltigen Wasserdampf verteilt, verspritzt oder verdüst wird.

Nach dem Verfahren zur Entfernung von restlichem Vinylchlorid aus Vinylchloridpolymeren, welche nach einer Polymerisation in Form einer wässrigen Dispersion vorliegen, wird somit die wässrige Polymerisatdispersion in einen Entgasungsbehälter übergeführt, auf eine der Einfriertemperatur des Polymeren wenigstens gleiche Temperatur, vorzugsweise auf eine Temperatur unter 120 °C gebracht und einem Mitschleppen durch ein inertes Fluid, nämlich Wasserdampf, unterworfen und entgast, wobei man in einem ersten Zeitabschnitt mittelbar oder unmittelbar Wärme, vorzugsweise durch den als inertes Fluid und Entgasungsmittel dienenden Wasserdampf, zuführt und in einem zweiten Zeitabschnitt nach einer Drosselung und nachfolgender Abschaltung der Wasserdampfzufuhr eine Absenkung des Druckes oder Anlegung eines Unterdruckes im Entgasungsbehälter derart durchführt, dass das Sieden der wässrigen Polymerisatdispersion ohne Wärmezufuhr von aussen im wesentlichen aufrechterhalten bleibt und mit Hilfe des aus der wässrigen Dispersion gebildeten Wasserdampfes das Mitschleppen von Vinylchlorid bzw. Entgasen fortgesetzt wird, wobei man den vinylchloridhaltigen Wasserdampf kondensiert, das Vinylchlorid einer Rückgewinnung zuführt und das kondensierte vinylchloridhaltige Wasser insgesamt oder teilweise in die wässrige Polymerisatdispersion einführt (vgl. DE-OS 25 31 111). Dadurch, dass nach dem erfindungsgemässen Verfahren das kondensierte vinylchloridhaltige Wasser nicht unmittelbar in die wässrige Polymerisatdispersion, sondern im Gegenstrom zu dem aus der Polymerisatdispersion austretenden Wasserdampf geführt und bei oder nach der Eintrittsstelle in dem vinylchloridhaltigen Wasserdampf verteilt, verspritzt oder verdüst wird, wird die Gefahr der Anreicherung von Vinylchlorid vermieden und das im vinylchloridhaltigen Kondensat enthaltende Vinylchlorid weitgehend zurückgewonnen.

Nach dem erfindungsgemässen Verfahren wird der aus der Polymerisatdispersion austretende vinylchloridhaltige Wasserdampf mit einer Strömungsgeschwindigkeit von 20 bis 200 m/s, vorzugsweise von 40 bis 140 m/s, dem vinylchloridhaltigen verteilten, verspritzten oder verdüsten Kondenswasser entgegengeführt. Wichtig ist dabei, dass die Geschwindigkeit des vinylchloridhaltigen Wasserdampfes je nach der Menge und der Verteilung des eintretenden vinylchloridhaltigen Kondenswassers ausreichend hoch gewählt wird, um eine gute Turbulenz mit dem eingebrachten vinylchloridhaltigen Kondenswasser zu erreichen. Dabei ist die Strecke oder Raumzone, in der das verteilte, verspritzte oder verdüste vinylchloridhaltige Kondenswasser im Gegenstrom zu dem vinylchloridhaltigen Wasserdampf geführt wird, länger als 0,5 m, vorzugsweise länger als 3 m.

Nach einer bevorzugten Ausführungsform wird der aus der Polymerisatdispersion austretende vinylchloridhaltige Wasserdampf innerhalb der Strecke oder Raumzone, in der das verteilte, verspritzte oder verdüste oder in sonstiger Weise zugegebene vinylchloridhaltige Kondenswasser zugeführt oder entgegengeführt wird, einer Verwirbelung bzw. Wirbelbildung unterworfen. Dadurch wird eine bessere Einwirkung des Wasserdampfes auf das vinylchloridhaltige Kondenswasser erreicht.

Damit eine bessere Ausbeute erzielt wird und eine vinylchloridhhaltige Emission nicht erfolgt, wird nach einer vorteilhaften Ausführungsform das vinylchloridhaltige Kondenswasser ganz oder teilweise im Kreislauf geführt.

Nach einer weiteren Ausführungsform erfolgt die Verwirbelung oder Wirbelbildung des aus der Polymerisatdispersion austretenden vinylchloridhaltigen Wasserdampfes mittels Vorsprünge, Roste, Gitter oder ähnlicher dampfzerteilenden Vorrichtungen.

Zur Ausübung des erfindungsgemässen Verfahrens kann eine Vorrichtung benutzt werden, wobei der Entgasungsbehälter mit einem oder mehreren mehr als 0,5 m, vorzugsweise mehr als 3 m, langen Rohren oder rohrähnlichen Vorrichtungen oder Kolonnen bzw. kolonnenähnlichen Vorrichtungen in Verbindung steht, in deren mittleren oder oberen Bereich eine oder mehrere Verteilungs- oder Zugabevorrichtungen, vorzugsweise Spritz-, Sprüh-, Eintrittsvorrichtungen oder Düsen für das einzubringende vinylchloridhaltige Kondenswasser angebracht sind.

Je grösser die Strömungsgeschwindigkeit des aus der Polymerisationsdispersion austretenden vinylchloridhaltigen Wasserdampfes ist, umso kleiner kann innerhalb der angegebenen Längenbereiche das auf dem Entgasungsbehälter befindliche Rohr, die rohrähnliche Vorrichtung, Kolonne oder kolonnenähnliche Vorrichtung sein und/oder umso geringer muss der Verteilungsgrad des durch die Verteilung- oder Zugabevorrichtung eingebrachten Kondenswasser sein, da eine Verwirbelung bzw. Wirbelbildung bereits weitgehend durch die erhöhte Strömungsgeschwindigkeit erzielt wird. Umgekehrt müssen jedoch bei niedrigen Strömungsgeschwindigkeiten innerhalb der angegebenen Bereiche des aus der Polymerisationsdispersion austretenden Wasserdampfes grössere Rohrlängen bzw. Kolonnenlängen oder mehrere Rohre mit den entsprechenden Verteilungs- oder Zugabevorrichtungen für das einzubringende vinylchloridhaltige Kondenswasser vorhanden sein. Auch die Feinverteilung durch Spritz-, Sprühvorrichtungen, Düsen und dgl. erzielt eine Verbesserung des Verfahrens. Die Verteilungs- oder Zugabevorrichtung für das einzubringende vinylchloridhaltige Kondenswasser, vorzugsweise die Spritz-, Sprüheintrittsvorrichtungen oder Düsen können so angeordnet sein, dass sie entweder der Strömungsrichtung des austretenden vinylchloridhaltigen Wasserdampfes entgegengerichtet sind oder in einem Winkel zur Strömungsrichtung angeordnet sind.

Nach einer bevorzugten Ausführungsform des Verfahrens steht die Verteilungs- oder Zugabevorrichtung für das einzubringende vinylchloridhaltige Kondenswasser über eine oder mehrere Rohrleitungen und eine oder mehrere Pumpen oder ähnliche Transportvorrichtungen für Flüssigkeiten mitmindestens einem Kondensat-Sammelbehälter für das einzubringende vinylchloridhaltige Kondenswasser in Verbindung. Durch die Vorrichtung wird die Zufuhr des Kondenswassers geregelt bzw. gesteuert.

Im mittleren oder oberen Bereich des mehr als 0,5 m, vorzugsweise mehr als 3 m, langen Rohres oder der rohrähnlichen Vorrichtung, der Kolonne oder kolonnenähnlichen Vorrichtung ist eine zusätzliche Rohrleitung zur Abführung des vinylchloridhaltigen Wasserdampfes angebracht, die mit einem Kondensator und/oder Stripper und mit einem Kondensat-Sammelbehälter über eine oder mehrere Rohrleitungen in Verbindung steht.

Mit Hilfe des erfindungsgemässen Verfahrens gelingt es, eine separate Einrichtung zum Austreiben des Vinylchlorids aus dem Kondenswasser zu ersparen, die sonst erforderlich wäre, weil das vinylchloridhaltige Kondenswasser zu Vinylchloridemissionen oder Abwasserverunreinigungen führen würde. Weiterhin wird durch das erfindungsgemässe Verfahren eine Zurückgewinnung der Vinylchloridmengen ohne wesentliche zusätzliche Energien erzielt, in Kombination mit einem Minimum an Überwachungs- und Bedienungsaufwand.

Ausführungsbeispiel

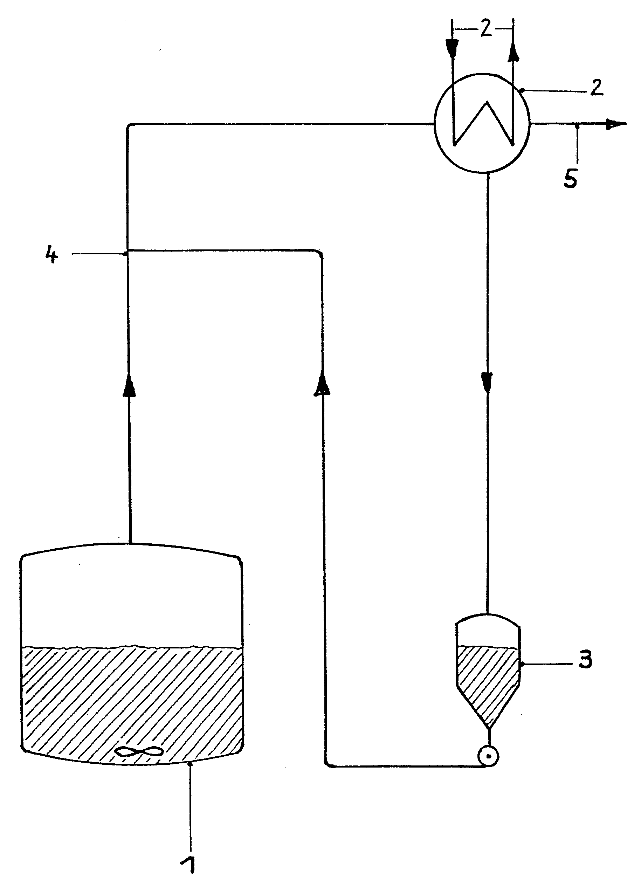

Die Entfernung von nicht umgesetztem Vinylchlorid aus einer wässrigen Polymerisatdispersion erfolgt diskontinuierlich mit einem Entgasungsbehälter (1). Die Dispersion besteht dabei aus ca. 20 t H$_2$O und ca. 10 t Polymerisat. Während des Verfahrens tritt aus dem Behälter vinylchloridhaltiger Wasserdampf, der im Kondensator (2) niedergeschlagen wird. Das Vinylchlorid wird der Rückgewinnung (5), das Kondenswasser dem Kondensatbehälter (3) zugeführt. Pro t PVC fallen 100 bis 400 kg Kondenswasser mit einer Vinylchloridkonzentration bis zu 8000 mg/l an. Dieses Kondenswasser wird nicht direkt in die Dispersion zurückgeführt, was zu einer VC-Anreicherung derselben führen würde, sondern es wird in einer speziellen Vorrichtung (4) im Gegenstrom zu dem der Polymerisatdispersion entweichenden vinylchloridhaltigen Wasserdampfes eingespritzt. Infolge der Rektifikationswirkung erfolgt eine fast vollständige Austreibung des Vinylchlorides aus dem Kondenswasser. Die wässrige Phase der Polymerisatdispersion enthält am Ende des Verfahrens <1 mg VC/l. Die erfindungsgemäss im Text der Patentanmeldung beschriebene Vorrichtung (4) wurde in der beigefügten Zeichnung nicht im einzelnen dargestellt.

**Patentansprüche**

1. Verfahren zur Entfernung von restlichem Vinylchlorid aus Vinylchloridpolymeren, welche nach einer Polymerisation in Form einer wässrigen Dispersion vorliegen, wobei man die wässrige Polymerisatdispersion auf eine der Einfriertemperatur des Polymeren wenigstens gleiche Temperatur, vorzugsweise auf eine Temperatur unter 120 °C bringt und sie einem Mitschleppen durch Wasserdampf unterwirft und entgast, wobei in einem ersten Zeitabschnitt unmittelbar oder mittelbar Wärme, vorzugsweise durch den als inertes Fluid und Entgasungsmittel dienenden Wasserdampf, zugeführt und in einem zweiten Zeitabschnitt nach einer Drosselung und nachfolgender Abschaltung der Wasserdampfzufuhr eine Absenkung des Druckes oder Anlegung eines Unterdruckes bei der Entgasung derart durchgeführt wird, dass das Sieden der wässrigen Polymerisatdispersion ohne Wärmezufuhr von aussen im wesentlichen aufrechterhalten bleibt und mit Hilfe des aus der wässrigen Dispersion gebildeten Wasserdampfes das Mitschleppen von Vinylchlorid bzw. Entgasen fortgesetzt wird, wobei man den vinylchloridhaltigen Wasserdampf kondensiert, das Vinylchlorid einer Rückgewinnung zuführt und das kondensierte vinylchloridhaltige Wasser insgesamt oder teilweise in die wässrige Polymerisatdispersion einführt, dadurch gekennzeichnet, dass das kondensierte vinylchloridhaltige Wasser nicht unmittelbar in die wässrige Polymerisatdispersion, sondern im Gegenstrom zu dem aus der Polymerisatdispersion austretenden und/oder gebildeten Wasserdampf geführt und bei oder nach der Eintrittsstelle in dem vinylchloridhaltigen Wasserdampf verteilt, verspritzt oder verdüst wird.

2. Verfahren nach Anspruch 1, dadurch gekennzeichnet, dass der aus der Polymerisatdispersion austretende vinylchloridhaltige Wasserdampf mit einer Strömungsgeschwindigkeit von 20 bis 200 m/s, vorzugsweise von 40 bis 140 m/s, dem vinylchloridhaltigen verteilten, verspritzten oder verdüsten Kondenswasser entgegengeführt wird.

3. Verfahren nach Anspruch 1, dadurch gekennzeichnet, dass die Strecke oder Raumzone, in der das verteilte, verspritzte oder verdüste vinylchloridhaltige Kondenswasser im Gegenstrom zu dem vinylchloridhaltigen Wasserdampf geführt wird, länger als 0,5 m, vorzugsweise länger als 3 m ist.

4. Verfahren nach Ansprüchen 1 bis 3, dadurch gekennzeichnet, dass das Mitschleppen mittels Wasserdampfes in einem speziell für diesen Zweck vorgesehenen Behälter (Entgasungsbehälter) durchgeführt wird.

5. Verfahren nach Ansprüchen 1 bis 4, dadurch gekennzeichnet, dass der aus der Polymerisatdispersion austretende vinylchloridhaltige Wasserdampf innerhalb der Strecke oder Raumzone, in der das verteilte, verspritzte oder verdüste oder in sonstiger Weise zugegebene vinylchloridhaltige Kondenswasser zugeführt oder entgegengeführt wird, einer Verwirbelung bzw. Wirbelbildung unterworfen wird.

6. Verfahren nach Ansprüchen 1 bis 5, dadurch gekennzeichnet, dass das vinylchloridhaltige Kondenswasser ganz oder teilweise im Kreislauf geführt wird.

7. Verfahren nach Ansprüchen 1 bis 6, dadurch gekennzeichnet, dass die Verwirbelung oder Wirbelbildung des aus der Polymerisatdispersion austretenden vinylchloridhaltigen Wasserdampfes mittels Vorsprünge, Roste, Gitter oder ähnlicher dampfzerteilender Vorrichtungen erfolgt.

8. Verfahren nach einem der Ansprüche 1 bis 7, dadurch gekennzeichnet, dass der Entgasungsbehälter mit einem oder mehreren mehr als 0,5 m, vorzugsweise mehr als 3 m, langen Rohren oder rohrähnlichen Vorrichtungen oder Kolonnen bzw. kolonnenähnlichen Vorrichtungen in Verbindung steht, in deren mittleren oder oberen Bereichen eine oder mehrere Verteilungs- oder Zugabevorrichtungen, vorzugsweise Spritz-, Sprüh-, Eintrittsvorrichtungen oder Düsen für das einzubringende vinylchloridhaltige Kondensationswasser angebracht sind.

9. Verfahren nach Anspruch 8, dadurch gekennzeichnet, dass die Verteilungs- oder Zugabevorrichtung für das einzubringende vinylchloridhaltige Kondenswasser über eine oder mehrere Rohrleitungen und eine oder mehrere Pumpen oder ähnliche Transportvorrichtungen für Flüssigkeiten mit mindestens einem Kondensat-Sammelbehälter für das einzubringende vinylchloridhaltige Kondenswasser in Verbindung steht.

10. Verfahren nach Ansprüchen 8 oder 9, dadurch gekennzeichnet, dass im mittleren oder oberen Bereich des mehr als 0,5 m, vorzugsweise mehr als 3 m, langen Rohres oder der rohrähnlichen Vorrichtung, der Kolonne oder kolonnenähnlichen Vorrichtung eine Rohrleitung zur Abführung des vinylchloridhaltigen Wasserdampfes angebracht ist, die mit einem Kondensator und/oder Stripper und mit einem Kondensat-Sammelbehälter über eine oder mehrere Rohrleitungen in Verbindung steht.

## Revendications

1. Procédé pour éliminer le chlorure de vinyle résiduel de polymères du chlorure de vinyle qui se trouvent après une polymérisation à l'état d'une dispersion aqueuse, procédé dans lequel on amène la dispersion aqueuse de polymère à une température au moins égale à la température de transition vitreuse du polymère, de préférence à une température inférieure à 120 °C, et on la soumet à un entraînement à la vapeur d'eau et la dégaze en introduisant – dans une première étape – de la chaleur directement ou indirectement, de préférence au moyen de la vapeur d'eau servant de fluide inerte et d'agent de dégazage, et en effectuant – dans une deuxième étape – après un étranglement suivi de l'arrêt de l'amenée de vapeur d'eau, un abaissement de la pression ou l'application d'une pression réduite dans le dégazage de telle manière que l'ébullition de la dispersion aqueuse de polymère reste sensiblement maintenue sans apport de chaleur de l'extérieure et que l'entraînement du chlorure de vinyle ou le dégazage soit poursuivi à l'aide de la vapeur d'eau formée à partir de la dispersion aqueuse, la vapeur d'eau contenant du chlorure de vinyle étant condensée, le chlorure de vinyle étant envoyé à un recyclage et l'eau condensée contenant du chlorure de vinyle étant introduite, totalement ou en partie, dans la dispersion aqueuse de polymère, ledit procédé étant caractérisé en ce qui l'eau condensée contenant du chlorure de vinyle n'est pas amenée directement dans la dispersion aqueuse de polymère, mais est introduite à contre-courant dans la vapeur d'eau qui sort de la dispersion de polymère ou qui s'y est formée et est répartie, injectée ou atomisée – à l'endroit d'introduction ou après cet endroit – dans la vapeur d'eau contenant du chlorure de vinyle.

2. Procédé suivant la revendication 1, caractérisé en ce que la vapeur d'eau contenant du chlorure de vinyle qui sort de la dispersion de polymère est amenée à contre-courant dans l'eau de condensation contenant du chlorure de vinyle, répartie, injectée ou atomisée, avec une vitesse de courant de 20 à 200 m/s, de préférence de 40 à 140 m/s.

3. Procédé suivant le revendication 1, caractérisé en ce que l'espace ou la zone où l'eau de condensation contenant du chlorure de vinyle, répartie, injectée ou atomisée, est amenée à contrecourant dans la vapeur d'eau contenant du chlorure de vinyle a une longueur supérieure à 0,5 m, de préférence supérieure à 3 m.

4. Procédé suivant les revendications 1 à 3, caractérisé en ce que l'entraînement à la vapeur d'eau est effectué dans un récipient (récipient de dégazage) spécialement prévu à cet effet.

5. Procédé suivant les revendications 1 à 4, caractérisé en ce que la vapeur d'eau contenant du chlorure de vinyle qui sort de la dispersion de polymère est soumise à un tourbillonnement ou à la formation d'un tourbillon à l'intérieur de l'espace ou de la zone où l'eau de condensation contenant du chlorure de vinyle, répartie, injectée, atomisée ou ajoutée d'une autre manière, est amenée ou passée à contre-courant.

6. Procédé suivant les revendications 1 à 5, caractérisé en ce qu'on fait cirucler l'eau de condensation contenant du chlorure de vinyle totalement ou en partie en circuit fermé.

7. Procédé suivant les revendications 1 à 6, caractérisé en ce que le tourbillonnement de la vapeur d'eau contenant du chlorure de vinyle qui sort de la dispersion de polymère est réalisé au moyen de saillies, de grilles, de treillis ou de dispositifs analogues capables de diviser la vapeur.

8. Procédé suivant l'une des revendications 1 à 7, caractérisé en ce que le récipient de dégazage est en communication avec un ou plusieurs conduits ou dispositifs tubulaires ou des colonnes longs de plus de 0,5 m, de préférence de plus de 3 m, dans la partie médiane ou supérieure desquels sont prévus un ou plusieurs organes de répartition ou d'adduction, de préférence des injecteurs, des pulvérisateurs, des organes d'amenée ou des buses pour l'introduction de l'eau de condensation contenant du chlorure de vinyle.

9. Procédé suivant la revendication 8, caractérisé en ce que la dispositif de répartition ou d'amenée de l'eau de condensation contenant du chlorure de vinyle à introduire est en communication avec au moins un récipient collecteur de l'eau de condensation contenant du chlorure de vinyle à introduire, via un ou plusieurs conduits et une ou plusieurs pompes ou dispositifs de transport de liquides analogues.

10. Procédé suivant l'une des revendications 8 ou 9, caractérisé en ce qu'il est prévu dans la zone médiane ou la zone supérieure du conduit, du dispositif tubulaire ou de la colonne longs de plus de 0,5 m, de préférence de plus de 3 m, une conduite destinée à l'évacuation de la vapeur d'eau contenant du chlorure de vinyle, cette conduite étant en communication avec un condenseur et/ou un stripper et avec un récipient collecteur de condensat, via un ou plusieurs conduits.

## Claims

1. Process for the removal of residual vinyl chloride from vinyl chloride polymers, which, after polymerisation, are present in the form of an aqueous dispersion, wherein the aqueous polymer dispersion is brought to a temperature which is at least equal to the freezing temperature of the polymer, preferably to a temperature below 120 °C and is subjected to an entrainment by steam and is degassed, wherein in a first period of time heat is supplied, directly or indirectly, preferably through the steam serving as inert fluid and degasification means, and in a second period of time after a throuttling and subsequent disconnection of the supply of steam, a lowering of the pressure or an application of an underpressure is carried out in the degasification such that the boiling of the aqueous polymer dispersion continues to be substantially maintained without an external supply of heat and, with the aid of the steam-formed from the aqueous dispersion, the entrainment of vinyl chloride or degasification is continued, wherein the steam containing vinyl chloride is condensed, the vinyl chloride is passed to a recovery section and the condensed water containing vinyl chloride is introduced in whole or in part into the aqueous polymer dispersion, characterised in that the condensed water containing vinyl chloride is not passed directly into the aqueous polymer dispersion, but is passed in counterflow to the steam emerging and/or formed from the polymer dispersion and is distributed, sprayed or injected at or after the point of entry in the steam containing vinyl chloride.

2. Process according to Claim 1, characterised in that the steam containing vinyl chloride emerging from the polymer dispersion at a velocity of flow of from 20 to 200 m/s, preferably from 40 to 140 m/s in carried contrary to the distributed, sprayed or injected condensed water containing vinyl chloride.

3. Process according to Claim 1, characterised in that the distance or spatial zone in which the distributed, sprayed or injected condensed water containing vinyl chloride is conducted in counterflow to the water vapour containing vinyl chloride, is longer than 0.5 m, preferably longer than 3 m.

4. Process according to Claims 1 to 3, characterised in that the entrainment by means of steam is carried out in a container (degasification container) which is specially provided for this purpose.

5. Process according to Claims 1 to 4, characterised in that the steam containing vinyl chloride emerging from the polymer dispersion is subjected to a turbulence or eddying within the distance or spatial zone in which the condensed water containing vinyl chloride which is distributed, sprayed or injected or otherwise supplied is conducted in or is conducted in the opposite direction.

6. Process according to Claims 1 to 5, characterised in that the condensed water containing vinyl chloride is recycled, in whole or in part.

7. Process according to Claims 1 to 6, characterised in that the turbulence or eddying of the steam containing vinyl chloride emerging from the polymer dispersion takes place by means of projections, gratings, grids or similar vapour-dispersing devices.

8. Process according to one of Claims 1 to 7, characterised in that the degasification container communicates with one or more pipes or pipe-like devices or columns of column-like devices which are more than 0.5 m long, preferably more than 3 m long, in the central or upper regions of which one or more distributing or feeding devices are arranged, preferably injecting, spraying or inlet devices or nozzles for the condensation water containing vinyl chloride which is to be introduced.

9. Process according to Claim 8, characterised in that the distributing of feeding device for the condensed water containing vinyl chloride which is to be introduced communicates via one or more pipelines and one or more pumps or similar transporting devices for fluids with at least one condensate reservoir for the condensed water containing vinyl chloride which is to be introduced.

10. Process according to Claims 8 or 9, characterised in that in the central or upper region of the pipe or pipe-like device, the column or column-like device, which is more than 0.5 m, preferably more than 3 m long, a pipeline is arranged for the removal of the steam containing vinyl chloride, which pipeline communicates with a condenser and/or stripper and with a condensate reservoir via one or more pipelines.

1/1